(19)

**Europäisches Patentamt**

**European Patent Office**

**Office européen des brevets**

(11)  **EP 4 631 362 A1**

(12)  **EUROPEAN PATENT APPLICATION**

(43) Date of publication:
**15.10.2025 Bulletin 2025/42**

(21) Application number: **24315145.3**

(22) Date of filing: **10.04.2024**

(51) International Patent Classification (IPC):
**A23K 20/28** (2016.01)      **A23K 50/45** (2016.01)
**A23K 50/48** (2016.01)

(52) Cooperative Patent Classification (CPC):
**A23K 50/48; A23K 20/28; A23K 50/45;**
A23K 20/20; A23K 20/24; A23K 50/40; A23K 50/42;
A23V 2200/32; A23V 2250/161; A23V 2250/1628;
A23V 2250/1638

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **MARS INCORPORATED**
**McLean, VA 22101 (US)**

(72) Inventors:
• **Kleim, Louise**
**30470 AIMARGUES (FR)**
• **Trehiou, Mélanie**
**30470 AIMARGUES (FR)**

(74) Representative: **Regimbeau**
**20, rue de Chazelles**
**75847 Paris Cedex 17 (FR)**

(54)  **NEW COMPOSITIONS FOR CAT STOOL ODOUR MANAGEMENT**

(57)    The present invention relates to a food composition for reducing faecal odours in feline, wherein the composition comprises attapulgite. Methods for assessing faecal odours in felines are also provided.

**EP 4 631 362 A1**

Processed by Luminess, 75001 PARIS (FR)

**Description**

<u>INTRODUCTION</u>

Stool odour in companion animals is an unpleasant reality of living with pets. For owners of animals that live indoors, especially cats and dogs that use litter boxes or are confined to kennels or other small spaces, this problem is particularly unpleasant. Stool odour in animals is partially a result of indigestion and microbial fermentation caused by inappropriate bacterial activity, inflammation and poor digestion or motility.

Stool odours in pets are generally managed by owners with litters. Indeed, the majority of domestic cats are confined indoors throughout their lives and deposit their daily urine and faeces output in litter containers. Generally, all these litters function for their intended purpose, e.g., managing animal urine and faeces. Further, the litters may, in some circumstances, be used for other purposes, e.g., absorbing environmental contaminants or treating wastewater. Cat litter containing deodorisers has been developed; however, this is an imperfect solution to the problem. Urine and faecal deposits in litter generate offensive odours that permeate household air, adversely affecting the quality of life of cat owners, and seriously affecting their enjoyment of cats as household companions.

Diet is also known to impact the odours of the pet faeces. For example, a recent study found that indole and phenol concentrations in volatile organic compounds (VOCs) are influenced by the protein source of the foods of French Bulldogs, but not by the amino acid profile. (Urrego et al. Dietary protein sources and their effects on faecal odour and the composition of volatile organic compounds in faeces of French Bulldogs. J Anim Physiol Anim Nutr (Berl). 2021;105 (Suppl 1):65-75). Unfortunately, these results have limited applicability. There is no evidence that the same diet would lead to the same effects in other dog breeds, let alone in other pets.

Many mammals, including cats, have special glands called anal glands or sacs located around their rectum. These glands serve a specific purpose by helping the animal mark its territory. As a cat defecates, its faeces naturally push against the internal portion of the anal gland causing it to be squeezed and secreting the anal gland fluid out with the faeces. A cat can also express its anal glands if it is scared or frightened.

Anal sac secretions contain volatile compounds that emit strong pungent odours used for scent communication in pets. For example, cat faeces contain several volatile and non-volatile compounds that help to recognise sex and species. However, little is known about the volatile compounds emitted from anal sac secretions and their biological functions in cats. Uetake et al. identified 24 volatile organic compounds, including phenolic compounds and indoles, by gas chromatograph-mass spectrometry (GC-MS) from cat faeces (Uetake et al. Volatile faecal components related to sex and age in domestic cats (Felis catus). J. Appl. Anim. Res. 2017; 46: 766-770). In another study, volatile chemical profiles of domestic cat anal sac secretions were analysed by using thermal desorption gas chromatography-mass spectrometry (TD-GC-MS) (Miyazaki et al. Olfactory discrimination of anal sac secretions in the domestic cat and the chemical profiles of the volatile compounds. J Ethol. 2018; 36(1):99-105). The major volatile compounds in both sexes were short-chain free fatty acids, including acetic acid, propanoic acid, 2-methylpropanoic acid, butanoic acid, 3-methylbutanoic acid, and pentanoic acid, with trimethylamine and indole identified as minor components. Banik et al. (Banik et al. Simultaneous Chemical and Sensory Analysis of Domestic Cat Urine and Feces with Headspace Solid-Phase Microextraction and GC-MS-Olfactometry. Separations. 2021; 8(2):15) attempted to identify the VOCs and associated odours in cat urine and faeces using the solid-phase microextraction (SPME) technique to concentrate the VOCs emitted by the samples before analysis by GC-MS. They found that phenolic compounds and aromatic heterocyclic organic N compounds generated the most intense odours and substantially contributed to the overall malodour. Further, they found that these compounds dropped below detection in stale car faeces.

However, none of these studies have identified factors which modulate the intensity and quality of the emission of these volatile compounds. In particular, it is not known how to reduce the emission of these volatile compounds, in particular those contributing to the unpleasant odour of cat faeces.

Pet food compositions including ingredients specifically reducing faecal odours in felines would be particularly useful, since they would provide a convenient tool for easily improving the life of the pet's owner.

The present disclosure provides such compositions.

<u>SUMMARY OF THE DISCLOSURE</u>

The purpose and advantages of the disclosed subject matter will be set forth in and are apparent from the description that follows, as well as will be learned by practice of the disclosed subject matter. Additional advantages of the disclosed subject matter will be realised and attained by the devices particularly pointed out in the written description and claims hereof, as well as from the appended drawings.

A first aspect of the present disclosure relates to a food composition for reducing faecal odours in a feline, the composition including attapulgite. Such compositions are particularly useful since they lead to a significant reduction of compounds known to generate the most intense odours and to substantially contribute to the intense malodour in the volatile organic chemicals (VOCs) emitted from feline faeces, e.g., phenolic compounds and aromatic heterocyclic organic N compounds, including p-cresol and indole.

In an embodiment, the food composition disclosed herein includes at least 0.05 % by weight of attapulgite.

In an embodiment, the food composition disclosed herein can be a dry composition, a wet composition, or a semi-moist composition.

In an embodiment, the food composition disclosed herein can be a dry food composition and can include from about 0.5 % by weight to about 2.5 % by weight, preferably around 1% by weight, of attapulgite.

In an embodiment, the food composition disclosed herein can be a wet food composition and can include from about 0.05 % by weight to about 0.2 % by weight, preferably around 0.125% by weight, of attapulgite.

In an embodiment, the food composition disclosed herein can be a nutritionally complete food or a functional complement.

More preferably, the feline is a cat, i.e., the domestic feline animal (*Felix catus*).

Another aspect of the present disclosure relates to a kit for manufacturing the food composition for a feline disclosed herein, wherein the kit includes attapulgite.

In another aspect, the present disclosure provides a method of manufacturing the food composition for a feline disclosed herein. Preferably, the method includes the steps of:

a) mixing attapulgite with the other components of the composition, such as the ones described therein;
b) heating the mixture, thereby manufacturing the food composition.

Another aspect of the present disclosure relates to a method for assessing the faecal odours in a feline which has been previously fed with pet food, notably a pet food composition of the disclosure. In a preferred embodiment, the method includes the steps of:

- feeding the feline at least one of the food compositions disclosed herein; and
- measuring by gas chromatograph-mass spectrometry (GC-MS) the levels of the various species of volatile organic compounds (VOCs), preferably phenolic compounds and aromatic heterocyclic organic N compounds, more preferably p-cresol and indole, emitted from the stools of that feline.

In a further preferred embodiment, the method can include a prior step of preconcentrated the VOCs by solid-phase micro Extraction (SPME) or by headspace (HS), preferentially by SPME.

Another aspect of the present disclosure relates to a method for assessing a reduction in faecal odours in a companion animal, including:

a) feeding the feline a first food composition,
b) measuring by GC-MS the levels of the various species of VOCs, preferably phenolic compounds and aromatic heterocyclic organic N compounds, more preferably p-cresol and indole, emitted by the stools of the feline fed with the first food composition, optionally after concentrating the VOCs by SPME or HS, preferentially by SPME;
c) feeding the feline a second food composition, wherein the second pet food composition incudes attapulgite;
d) measuring by GC-MS the levels of the various species of VOCs, preferably phenolic compounds and aromatic heterocyclic organic N compounds, more preferably p-cresol and indole, emitted by the stools of the feline fed with the second food composition, optionally after concentrating the VOCs by SPME or HS, preferentially by HPME;
e) comparing the level of step d) with the level of step b).

## FIGURE LEGENDS

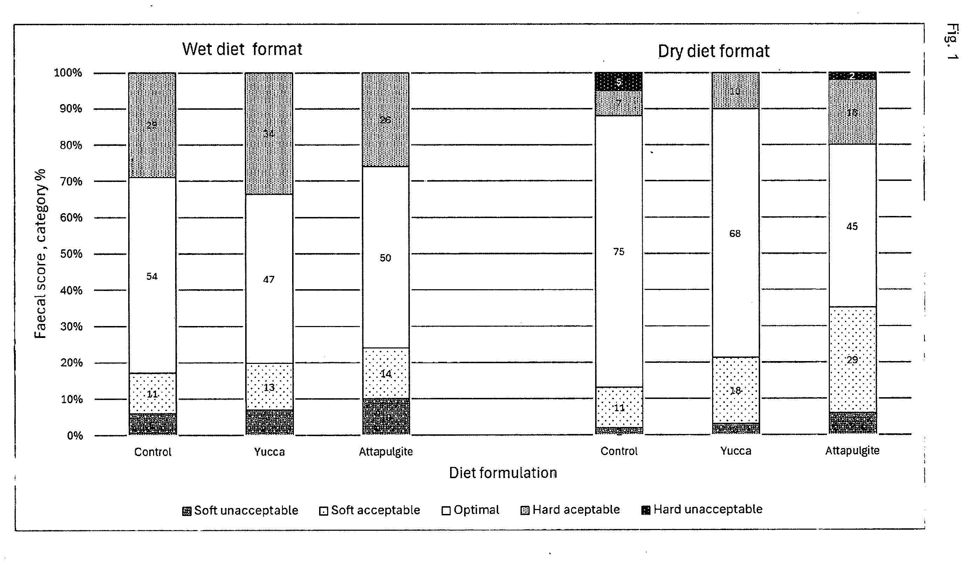

**Figure 1.** Fecal scores: percentage by category for cats fed wet or dry diets.

**Figure 2.** Mean intensity of fecal odors associated with wet (A) and dry (B) diet formats.

**Figure 3.** Volatile aldehydes (A) and esters (B) as proportions of the head space gas in GC-MS analysis of faeces from cats fed wet diets.

**Figure 4.** Volatile esters (A), ketones (B), and phenyl compounds (C) as proportions of the head space gas in GC-MS analysis of faeces from cats fed dry diets.

**Figure 5.** Mean quantities of volatile indole from cats fed different diet formats and formulations.

**Figure 6.** Measures of diet palatability.

## DETAILED DESCRIPTION OF THE DISCLOSURE

### Definitions

The terms used in this specification generally have their ordinary meanings in the art, within the context of this disclosure and in the specific context where each term is used. Certain terms are discussed below, or elsewhere in the specification, to provide additional guidance in describing the compositions and methods of the disclosure and how to make and use them.

As used herein, references to "embodiment," "an embodiment," "one embodiment," "in various embodiments," "in some embodiments," or any other variation thereof, indicate that the described embodiment(s) can include a particular feature, structure, or characteristic, but every embodiment might not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the present description, it will be apparent to one skilled in the relevant art(s) how to implement the disclosure in alternative embodiments.

As used herein, "about" or "approximately" means within an acceptable error range for the particular value as determined by one of ordinary skill in the art, which will depend in part on how the value is measured or determined, i.e., the limitations of the measurement system. For example, "about" can mean a range of up to 20%, preferably up to 10%, more preferably up to 5%, and more preferably still up to 1% of a given value.

As used herein, the term "animal" refers to animals including, but not limited, to human animals and non-human animals. Preferably animals refer to non-human animals, in particular companion animals, i.e., pets, i.e., canine, felines, i.e., dogs, cats, and the like. Domestic dogs and cats are non-limiting examples of animals.

As used herein, the term "feline" encompasses animals, including pet animals, selected from cheetah, puma, jaguar, leopard, lion, lynx, tiger, tiger, panther, bobcat, ocelot, smilodon, caracal, serval and cats. As used herein, cats encompass wild cats and domestic cats, and most preferably domestic cats.

The term "animal protein" as used herein refers to proteins that originate from vertebrates, such as mammals, poultry and fish. Animal protein can originate, for example, from muscle meat, organs, tendons, or bone.

As used herein, the term "antioxidant" refers to any molecule, composition or products which delays or prevents the oxidation of an animal food composition, and in particular of an oxidisable fat. Antioxidant food compositions or products of the present disclosure prevent or delay the oxidation process. Further, antioxidants preserve fresh attributes and nutritional quality of the corresponding food composition or product. Antioxidants of the present disclosure can include or can consist of synthetic or natural antioxidants. Advantageously, food compositions or products can include lesser amounts of synthetic antioxidants. According to some embodiments, such antioxidant food compositions can include minimal, or undetectable, amounts of synthetic antioxidants. For example, such antioxidant food compositions can include synthetic antioxidants in amounts less than about 1% in weight of the total weight of the corresponding composition. Advantageously, the antioxidants which can be present in such food compositions, or products, consist exclusively of non-synthetic (i.e., natural) antioxidants.

As used herein, the term "synthetic antioxidant" refers to chemically synthesised, non-naturally occurring, compounds which can be added to food as preservatives to help prevent lipid oxidation. In a non-exhaustive manner, this term thus encompasses the following compounds: Butylated hydroxytoluene (BHT), butylated hydroxyanisole (BHA), TBHQ (tert-butylhydroxyquinone), propyl gallate (PG), dodecyl gallate (DG), octylgallate (OG) and chelating agent, such as ethylenediaminetetraacetic acid (EDTA).

As used herein, the term "natural antioxidant" refers to naturally-occurring compounds with antioxidant properties.

The "antioxidant" properties of a given product or composition of the present disclosure can be assessed by determining its ability to delay or prevent the oxidation of a molecule such as a lipid, lipoprotein, protein or DNA, over a given length of time.

The expression "as fed" as used herein refers to a method of expressing the concentration of a nutrient or a component in a feed by expressing its concentration in the state it is fed, which includes moisture.

The term "attapulgite" or "palygorskite" as used herein refers to a hydrated magnesium aluminium silicate the ideal unit cell of which corresponds to the following composition:

$$Mg_2Al_2Si_8O_{20}(OH)_2(OH_2)_4M^+.(H_2O)_4$$

Attapulgite as used herein consist of double silica tetrahedral chains linked together by octahedral oxygen and hydroxyl groups containing Al and Mg ions in a chain-like inverted structure. The inverted tetrahedral occurs regularly and causes channels through the structure.

The term "Aw" as used herein refers to water activity. Water activity refers to the ratio of the partial vapour pressure of water in a food composition divided by the standard state partial vapour pressure of water. Several methods, known to the skilled person, can be employed to measure the water activity such as but not limited to a resistive electrolytic, a capacitance or a dew point hygrometer. In certain particular embodiments, it is referred to the method prescribed by the International Standard ISO 21087 relating to determining water activity in animal food and animal feeding stuffs.

The expression "dry matter (DM) basis" as used herein refers to a method of expressing the concentration of a nutrient or a component in a feed by expressing its concentration relative to its dry matter content, i.e., the concentration remaining once the moisture has been taken out.

The expression "weight percent" or "wt %" or "by weight" is meant to refer to the quantity by weight of a constituent/component/ingredient in a food composition as a percentage of the total weight of the food composition. More specifically, as used herein, unless specifically provided otherwise, the term "% by weight" or "% in weight" means the quantity in % by weight of the food composition on dry matter basis. As an example, when it is read *"at least 0.05 % by weight of attapulgite"* it means *"at least 0.05 % of attapulgite in % by weight of the food composition on dry matter basis"*.

As used herein, the term "fat" refers to the total amount of digestible, partially digestible and nondigestible fats or oils that are present in the embodiments of the present disclosure; especially the food products or compositions for which fat oxidation should be prevented or delayed. As used herein, the terms "lipid", "fat" and "oil" are synonymous. The constituents of oils and fats are known in chemistry to possess a tendency to absorb and react with oxygen. The development of rancidity results primarily from the products formed during oxidation. The dissolved or absorbed oxygen usually reacts first to form peroxides. The development of peroxides is accelerated by moisture, heat, light or catalysts. Aldehydes, ketones and acids of lower molecular weight are formed in the further decomposition and these materials impart an undesirable odour and taste to the oil or fat. For quality assessment, methods known by the skilled person, such as peroxide value determination (PV), hexanal value determination, ferric thiocyanate method (FTC), thiobarbituric acid method (TBA), anisidine index determination, conjugated dienes determination, or any method for determining the stability such as oxygen bomb or rancimat. According to a preferred embodiment, the determination of major primary products (i.e., hydroperoxides) resulting from lipid oxidation, as well as secondary compounds (including alkanes, alkenes, aldehydes, ketones, alcohols, esters, acids and hydrocarbons) can thus be used to assess antioxidant properties. In a non-exhaustive manner, those antioxidant properties can thus be assessed by determining a "peroxide value" (PV), or an "hexanal value".

As used herein, the term "functional food" refers to a food composition which provides nutritional components that are important for health maintenance. These food compositions contain compounds that are biologically active or bioavailable, such as probiotics, amino acids, multivitamins, and antioxidants, and often are found to be useful for the treatment of disease and disorders or the maintenance of normal health states.

As used herein, the term "glycerine" as used herein refers to its conventional meaning in the art. Glycerine, which can also be termed "glycerol" herein, is the simple polyol 1,2,3-propanetriol.

As used herein "hexanal value" refers to the marker for fatty acids second oxidation degradation compounds. Hexanal values of fresh food products are less than about 15 ppm whereas when the hexanal value is between about 15 and about 40 ppm, the food composition is considered rancid. According to a preferred embodiment, these values have also to be determined at end of shelf-life. According to an embodiment, a value up to 15 ppm will be considered as rancid. Methods to analyse the hexanal level of an animal food product are well known by the skilled person. Illustratively, the skilled person can use the AOCS method Cg 4-94 (AOCS. 1997).

The term "humectant plasticiser" as used herein refers to any humectant plasticizers that have humectant properties and that are compatible with food compositions. Plasticiser properties allow to bring textural properties to the composition in which it is added. Humectant properties allow the binding with water and therefore reducing the water activity (Aw) of composition.

The term "non-animal protein" as used herein refers to proteins that are not animal protein. Examples of non-animal protein include vegetable proteins, algal proteins, egg proteins, milk proteins, microbial proteins, and insect proteins.

As used herein the term "nutritionally balanced" refers to an animal food composition which, through a single or reference serving of the said food, provides a nutritionally desirable level of fat, protein or amino acid source, and dietary fibre. The term "nutritionally balanced", as used herein, can thus refer to animal food compositions that can be nutritionally complete. Alternatively, "nutritionally balanced", as used herein, can also refer to animal food compositions that are not nutritionally complete.

As used herein, the term "nutritionally complete" refers to animal food compositions that contain all known required nutrients for the intended recipient of the animal food composition, in all appropriate amounts and proportions based, for example, on recommendations of recognised and competent authorities in the field of animal nutrition. Such foods are therefore capable of serving as a source of dietary intake to maintain life, without the addition of supplemental nutritional sources.

The term "palatability" as used herein refers to a relative preference of an animal for one ingestible composition to another. Palatability refers to the overall willingness of an animal to eat a certain ingestible composition. Advantageously but not necessarily, palatability further refers to the capacity of the eaten ingestible composition to satisfy the animal. Whenever an animal shows a preference, for example, for one of two or more ingestible compositions, the preferred composition is more "palatable", and has "enhanced palatability". The relative palatability of one ingestible composition compared to one or more other ingestible compositions can be determined, for example, in side-by-side, free-choice comparisons, e.g., by relative consumption of the ingestible composition, or other appropriate measures of preference indicative of palatability. It can advantageously be determined by a standard testing protocol in which the animal has equal access to both ingestible compositions such as a test called "two-bowl test" or "versus test" (see below). Such preference can arise from any of the animal's senses, but typically is related to, inter alia, taste, aftertaste, smell, mouth feel and/or texture.

The term "palatability enhancer" as used herein refers to any compound, composition, formulation, or other material useful for enhancing the attractiveness and palatability of a comestible composition such as a food composition, supplement, medicament, or the like. Thus, such palatability enhancer can contribute to initial appeal, continued consumption, or repeated presentation aspects of palatability, or any combination thereof. Such product can consist of liquid and/or powder palatants. Examples fats and oils (e.g., poultry fat, tallow), flavours, chemical molecules (e.g., 2,5 dimethylpyrazine), aromas, extracts (e.g., yeast), digests, hydrolysates (e.g., poultry liver), protein ingredient (e.g., poultry meal), carbohydrate food (e.g., rice flour), powders and the like. For example, the palatability enhancer can consist of fragrances such as food fragrances, odour masking agents, and mixtures thereof, such as flavour compound as well as precursors for the above. The palatability enhancer does not consist of a food product or composition or of a nutritional product.

As used herein "peroxide value" (PV) refers to the marker for fatty acids primary oxidation degradation compounds. Otherwise said, PV is used for the quantification of primary fat-oxidation products. Peroxide values of fresh food products are less than about 10 milliequivalents/kg (mEq/kg) whereas when the peroxide value is between about 20 and about 40 mEq/kg, the food product is considered rancid. According to a preferred embodiment, these values must be determined at end of shelf-life. According to an embodiment, a value up to 10 mEq/kg will be considered as rancid. Methods to analyse the PV of an animal food product are well known by the skilled person. Illustratively, the skilled person can use the NF EN ISO 3960 (Version of April 2017).

As used herein, the term "pet food composition", "animal food composition", "food composition", "composition", "pet food product" or "animal food product" or "food product" or "product" refers to a composition or product intended for ingestion by an animal or a pet. Animal food products can include, without limitation, any composition or product which is suitable for daily feed as well as treats, nutritionally balanced or not, and nutritionally complete or not.

Food compositions and animal food products disclosed herein can be dry, wet or semi-moist food. In particular, animal food products and food compositions can be dry animal food products or dry food compositions.

As used herein, the terms "dry food product" or "dry food composition" generally refer to a food product or composition having a moisture content of less than 12% by weight, relative to the total weight of the food product or composition, and commonly even less than 7% by weight, relative to the total weight of the food product or composition. Dry animal food products can be formed by an extrusion process. In some embodiments, a dry animal food product can be formed from a core and a coating to form a dry animal food product that is coated, also called a coated dry animal food product. It should be understood that when the term "dry animal food product" is used, it can refer to an uncoated dry animal food product or a coated dry animal food product. A dry animal food composition can be a kibble.

As used herein, the term "kibble" can include a particulate pellet like component of animal feeds, such as cat feeds, typically having a moisture, or water, content of less than 12% by weight, relative to the total weight of the kibble. Kibbles can range in texture from hard to soft. Kibbles can range in internal structure from expanded to dense.

As used herein, the term "core", or "core matrix", means the particulate pellet of a dry food product, i.e., a kibble, and is typically formed from a core matrix of ingredients. The particulate pellet can be coated to form a coating on a core, which can be a coated dry food product. The core can be without a coating or can be with a partial coating. In an embodiment without a coating, the particulate pellet can include the entire dry food product. Cores can include farinaceous material, proteinaceous material, and mixtures and combinations thereof. In one embodiment, the core can include a core matrix of protein, carbohydrate, and fat.

As used herein, the term "coating" means a partial or complete covering, typically on a core, that covers at least a portion of a surface, for example a surface of a core. In one example, a core can be partially covered with a coating such that only part of the core is covered, and part of the core is not covered and is thus exposed. In another example, the core can be completely covered with a coating such that the entire core is covered and thus not exposed. Therefore, a coating can cover from a negligible amount up to the entire surface. In an embodiment, a food composition of the disclosure can be suitable for the preparation of a dry food composition by coating.

As used herein, the terms "wet food product" or "wet food composition" generally refer to a food product or composition having a moisture content of higher than 12% by weight, relative to the total weight of the food product or composition, and commonly even higher than 30% by weight, relative to the total weight of the food product or composition.

As used herein, the term "semi-moist food" or "semi-moist food composition" or "semi-moist food product" particularly refers to a food composition with an intermediate moisture content of about 12% to about 30% in weight, relative to the total weight of the food composition. Hence, such semi-moist food composition is generally the final product of a process allowing a moisture content value that is intermediate between a dry food and a wet food. In some embodiments, the said process can include a step of adding a humectant agent. In some embodiments, the said process includes an extrusion step and a subsequent treatment step with SuperHeated Steam (SHS). In some embodiments, the semi-moist food according to the present disclosure containing more than 12% and at most 30% moisture by weight, relative to the total weight of the food composition. Illustratively, a semi-moist food composition has 11% to 25% moisture by weight, relative to the total weight of the food composition.

The term "starch" as used herein refers to a polysaccharide that is composed of amylose and amylopectin.

The food compositions

The present disclosure provides food compositions suitable for decreasing faecal odours in felines.

The food compositions disclosed herein include attapulgite in an amount effective for decreasing faecal odours in felines.

Attapulgite clay is a rare, fibrous clay which is also known as palygorskite or fuller's earth, which is composed principally of the mineral attapulgite, a crystalline hydrated magnesium aluminium silicate ($Mg_2Al_2Si_8O_{20}(OH)_2$ $(OH_2)_4M^+.(H_2O)_4$). Attapulgite can be associated with accessory minerals in the clay. It can also contain some impurities such as calcium carbonate, quartz and feldspar, and in some cases, sepiolite.

The fibrous nature of attapulgite gives the clay a high surface area and porosity which provide excellent sorption and gelling properties. Attapulgite was mostly used in the art as absorbent granules and powders, mostly for pet litter markets and general industrial absorbents (see e.g., US 6,074,460; EP 2283723B1). Attapulgite has also been used as a supplement in human and animal food. Because of its high sorption capacity and large specific surface area, attapulgite can also function as gastrointestinal protectors. Prior to usage, it is normally "activated" by heating or acid treatment in order to enhance its sorption capacity. Previous studies have also demonstrated its protective nature, notably against diarrhoea, in both animals and humans (Zaid et al. Attapulgite in the Treatment of Acute Diarrhoea: A Double-blind Placebo-controlled Study. Journal of Diarrhoeal Diseases Research. 1995; 13(1), 44-46; Carretero & Pozo. Clay and non-clay minerals in the pharmaceutical and cosmetic industries. Part II. Active ingredients. Appl. Clay Sci. 2010; 47: 171-181).

Surprisingly, it is shown herein that food compositions including attapulgite when fed to felines can result in decreased faecal odours. Indeed, food compositions including attapulgite can lead to a significant reduction of phenolic compounds and aromatic heterocyclic organic N compounds, such as e.g., p-cresol and indole, respectively, in the volatile organic chemicals (VOCs) emitted from feline faeces. This is particularly important, since these compounds are known to generate the most intense odours and to substantially contribute to the intense malodour (Banik et al. Simultaneous Chemical and Sensory Analysis of Domestic Cat Urine and Feces with Headspace Solid-Phase Microextraction and GC-MS-Olfactometry. Separations. 2021; 8(2):15).

Attapulgite can be provided in any form suitable for administration to an animal. Attapulgite can be obtained from any suitable source, as a clay or processed. In some embodiments, attapulgite can be associated with accessory minerals, such as e.g., quartz, mica, calcite, dolomite, among others. In some embodiments, some processes can be used to enhance attapulgite properties, such as adding 1% or 2% MgO to improve the viscosity; drying with high heat to remove the zeolitic water from the holes in the structure to increase the sorbent properties; pulverising to ultrafine particles for improving suspension properties and increasing the surface area; and activating by acid in order to increasing sorption. Attapulgite, whether used as clay or processed, can be obtained directly or provided by a commercial source.

The food compositions include attapulgite in an amount effective for decreasing faecal odours in felines.

The food composition can be used with any feline. Preferably, the feline is a cat. Most preferably, the feline is a domestic feline animal *(Felis catus)*.

According to some embodiments, the food compositions disclosed herein can include, in % by weight, at least about 0.05 %, at least about 0.075 % of attapulgite, at least about 0.1 %, at least about 0.125 %, at least about 0.15 %, at least about 0.175 %, at least about 0.2 %, at least about 0.3 %, at least about 0.4 %, at least about 0.5 %, at least about 0.6 %, at least about 0.7 %, at least about 0.8 %, at least about 0.9 %, at least about 1 %, at least about 1.25%, at least about 1,5 %, at least about 1.75 %, , at least about 2 %, or at least about 2.5 % of attapulgite.

According to some embodiments, the food compositions disclosed herein can include from about 0.05 % by weight to about 2.5 % by weight of attapulgite. According to some embodiments, the food compositions disclosed herein can include from about 0.075 % by weight to about 2.5 % by weight of attapulgite. According to some embodiments, the food compositions disclosed herein can include from about 0.1 % by weight to about 2.5 % by weight of attapulgite. According to some embodiments, the food compositions disclosed herein can include from about 0.125 % by weight to about 2.5 % by weight of attapulgite. According to some embodiments, the food compositions disclosed herein can include from about 0.15 % by weight to about 0.15 % by weight of attapulgite. According to some embodiments, the food compositions disclosed herein can include from about 0.175 % by weight to about 2.5 % by weight of attapulgite. According to some embodiments, the food compositions disclosed herein can include from about 0.2 % by weight to about 2.5 % by weight of attapulgite. According to some embodiments, the food compositions disclosed herein can include from about 0.3 % by weight to about 2.5 % by weight of attapulgite. According to some embodiments, the food compositions disclosed herein can include from about 0.4 % by weight to about 2.5 % by weight of attapulgite. According to some embodiments, the food compositions disclosed herein can include rom about 0.5 ù by weight to about 2.5 % by weight of attapulgite. According to some embodiments, the food compositions disclosed herein can include from about 0.6 % by weight to about 2.5 % by weight of attapulgite. According to some embodiments, the food compositions disclosed herein can include from about 0.7% by weight to about 2.5 % by weight of attapulgite. According to some embodiments, the food compositions disclosed herein can include from about 0.8 % by weight to about 2.5 % by weight of attapulgite. According to some embodiments, the food compositions disclosed herein can include from about 0.9 % by weight to about 2.5 % by weight of attapulgite. According to some embodiments, the food compositions disclosed herein can include from about 1 % by weight to about 2.5 % by weight of attapulgite. According to some embodiments, the food compositions disclosed herein can include from about 1.25 % by weight to about 2.5 % by weight of attapulgite. According to some embodiments, the food compositions disclosed herein can include from about 1.5 % by weight to about 2.5 % by weight of attapulgite. According to some embodiments, the food compositions disclosed herein can include from about 1.75 % by weight to about 2.5 % by weight of attapulgite. According to some embodiments, the food compositions disclosed herein can include from about 2 % by weight to about 2.5 % by weight of attapulgite.

According to some embodiments, the food compositions disclosed herein can include from about 0.05 % by weight to about 0.075 % by weight of attapulgite. According to some embodiments, the food compositions disclosed herein can include from about 0.05 % by weight to about 0.1 % by weight of attapulgite. According to some embodiments, the food compositions disclosed herein can include from about 0.05 % by weight to about 0.125 % by weight of attapulgite. According to some embodiments, the food compositions disclosed herein can include from about 0.05 % by weight to about 0.15 % by weight of attapulgite. According to some embodiments, the food compositions disclosed herein can include from about 0.05 % by weight to about 0.175 % by weight of attapulgite. According to some embodiments, the food compositions disclosed herein can include from about 0.05 % by weight to about 0.2 % by weight of attapulgite. According to some embodiments, the food compositions disclosed herein can include from about 0.05 % by weight to about 0.3 % by weight of attapulgite. According to some embodiments, the food compositions disclosed herein can include from about 0.05 % by weight to about 0.4 % by weight of attapulgite. According to some embodiments, the food compositions disclosed herein can include, from about 0.05 % by weight to about 0.5 % by weight of attapulgite. According to some embodiments, the food compositions disclosed herein can include from about 0.05 % by weight to about 0.6 % by weight of attapulgite. According to some embodiments, the food compositions disclosed herein can include from about 0.05 % by weight to about 0.7 % by weight of attapulgite. According to some embodiments, the food compositions disclosed herein can include from about 0.05 % by weight to about 0.8 % by weight of attapulgite. According to some embodiments, the food compositions disclosed herein can include from about 0.05 % by weight to about 0.9 % by weight of attapulgite. According to some embodiments, the food compositions disclosed herein can include from about 0.05 % by weight to about 1 % by weight of attapulgite. According to some embodiments, the food compositions disclosed herein can include from about 0.05 % by weight to about 1.25 % by weight of attapulgite. According to some embodiments, the food compositions disclosed herein can include from about 0.05 % by weight to about 1.5 % by weight of attapulgite. According to some embodiments, the food compositions disclosed herein can include from about 0.05 % by weight to about 1.75 % by weight of attapulgite. According to some embodiments, the food compositions disclosed herein can include from about 0.05 % by weight to about 2 % by weight of attapulgite. According to some embodiments, the food compositions disclosed herein can include from about 0.05 % by weight to about 2.5 % by weight of attapulgite.

In one embodiment, the food compositions disclosed herein can include foods intended to supply the necessary dietary requirements for an animal, animal treats (e.g., biscuits), or dietary supplements. The compositions can be a dry composition (e.g., kibble), a semi-moist composition, a wet composition, or any mixture thereof.

In one embodiment, the food composition described herein can be a dry food composition and can include, in % by weight, at least about 0.5 %, at least about 0.6 %, at least about 0.7 %, at least about 0.8 %, at least about 0.9 %, at least about 1 %, at least about 1.25 %, at least about 1.5 %, at least about 1.75 %, at least about 2 % of attapulgite, or at least about 2.5 % of attapulgite.

According to some embodiments, the food composition disclosed herein can be a dry food composition and can include from about 0.5 % by weight to about 2.5 % by weight of attapulgite. According to some embodiments, the food composition disclosed herein can be a dry food composition and can include from about 0.6 % by weight to about 2 % by weight of attapulgite. According to some embodiments, the food composition disclosed herein can be a dry food composition and can include from about 0.7 % by weight to about 1.75 % by weight of attapulgite. According to some embodiments, the food composition disclosed herein can be a dry food composition and can include from about 0.8 % by weight to about 1.5 % by weight of attapulgite. According to some embodiments, the food composition disclosed herein can be a dry food composition and can include from about 0.9 % by weight to about 1.25 % by weight of attapulgite. According to some embodiments, the food composition disclosed herein can be a dry food composition and can include from about 1 % by weight of attapulgite.

According to some embodiments, the food composition disclosed herein can be a wet food composition and can include, in % by weight, at least about 0.05 %, at least about 0.075 % of attapulgite, at least about 0.1 %, at least about 0.125 %, at least about 0.15 %, at least about 0.175 %, or at least about 0.2 % of attapulgite.

According to some embodiments, the food composition disclosed herein can be a wet food composition and can include from about 0.05 % by weight to about 0.2 % by weight of attapulgite. According to some embodiments, the food composition disclosed herein can be a wet food composition and can include from about 0.075 % by weight to about 0.175 % by weight of attapulgite. According to some embodiments, the food composition disclosed herein can be a wet food composition and can include from about 0.1 % by weight to about 0.15 % by weight of attapulgite. According to some embodiments, the food composition disclosed herein can be a wet food composition and can include about 0.125 % by weight of attapulgite.

In one embodiment, the food compositions disclosed herein can be refrigerated or frozen compositions. In another embodiment, attapulgite can be pre-blended with the other components to provide the beneficial amounts needed. In yet other embodiments, attapulgite can be added to the composition just prior to offering it to the feline, e.g., using a sprinkled powder or a mix.

In some embodiments, a food composition disclosed herein can be a nutritionally complete food or a functional complement. A complete food is a nutritionally adequate feed for felines, that can be fed as a sole ration and is capable of sustaining life without additional food (aside from water).

A functional complement can include functional ingredients for a dedicated specific effect for the feline. Various functional ingredients can be included. The functional ingredients can include, but are not limited to, a vitamin, a mineral, conjugated linoleic acid, an antioxidant, a microorganism, illustratively a probiotic, a moiety such as a metabolite or a supernatant of culture of such microorganism, an extract from a plant that may contain any of the above, a dietary supplement, or combinations and mixtures of the above.

The moisture content can vary depending on the nature of the food composition disclosed herein. In certain embodiments, the food composition can be a nutritionally complete dry, wet or semi-moist food composition. A dry or low moisture-containing nutritionally- complete food composition can have less than about 15% moisture. A wet or high moisture-containing nutritionally-complete food composition can have greater than about 50% of moisture. Such food compositions can include from about 10% to about 70% of protein, from about 10% to about 90% of fat, and from about 5% to about 80% of carbohydrates, e.g., dietary fibre and ash, on a percent energy basis.

In certain embodiments, the food composition can be a nutritionally complete dry, wet or semi-moist. In certain embodiments, the food composition can include from about 60% of fat, from about 30% of protein and from about 10% of carbohydrates, e.g., dietary fibre and ash, on a percent energy basis.

In certain embodiments, the food composition can be a nutritionally complete moist food composition. A moist, e.g., semi-moist or semi-dry or soft dry or soft moist or intermediate or medium moisture containing nutritionally-complete food composition can have from about 15% to about 50% moisture.

In certain embodiments, the food composition can be a food snack. Non-limiting examples of food snack include snack bars, chews, crunchy treats, cereal bars, snacks, biscuits and sweet products.

According to certain embodiments provided herein, the compositions disclosed herein, can be used with a high-quality commercial food. As used herein, "high-quality commercial food" refers to a diet manufactured to produce the digestibility of the key nutrients of 80% or more, as set forth in, for example, the recommendations of the National Research Council above for dogs, or in the guidelines set forth by the Association of American Feed Control Officials Similar high nutrient standards would be used for other animals.

In one embodiment, the food compositions of the disclosure can include any of a variety of ingredients or combinations thereof selected for their contributions to the overall composition. Thus, a skilled food technologist may choose from among natural (e.g., plant or plant-derived, animal or animal-derived, and microbial or microbially-derived), and synthetic ingredients or components. In some embodiments, the ingredients can include any of the cereal grains and/or fractions or components thereof, meat and meat by-products, fish, shellfish, or other seafood, other animal products or by-products, eggs from any source, vitamins, minerals, salts, sweeteners, fibre, flavouring or other palatants, colouring, and functional ingredients such as emulsifiers, stabilisers, softeners, functional coatings, and the like.

The skilled person will also appreciate that in formulating the food compositions of the disclosure, the formulation can vary slightly, so as to allow consideration by the formulator of the price and/or availability of certain ingredients in the compositions, as well as the batch-to-batch variation in the analysis of certain ingredients. Thus, a given food composition or formulation can vary slightly from batch to batch, plant to plant, or even season to season depending on such factors.

Notwithstanding such variation in specific ingredients selected for manufacturing a particular batch of a food composition, the overall composition (for example, analysis of protein, carbohydrate, fat, fibre, or other component) may be held constant or at least substantially constant, for example, in accordance with a label claim, such as a claim or guarantee of a minimum or maximum percent of a particular component.

*Proteins*

A food composition according to the present disclosure can contain one or more distinct source(s) of proteins. Generally, a food composition as described herein can include a plurality of sources of proteins.

As mentioned previously, a food composition as disclosed herein can include from about 15% to about 30% by weight of a protein source.

As used herein, a protein source content ranging from about 15% to about 30% by weight can include a protein content of about 15%, about 16%, about 17%, about 18%, about 19%, about 20%, about 21%, about 22%, about 23%, about 24%, about 25%, about 26%, about 27%, about 28%, about 29% and about 30% by weight.

In an embodiment, a food composition of the disclosure can include from about 18 % by weight to about 25 % by weight of a protein source.

The proteins present in a composition of the disclosure can be hydrolysed or non-hydrolysed.

Proteins present in a food composition of the disclosure can be selected from vegetal and animal proteins, i.e., can be of vegetal and/or animal source(s). In a particular embodiment, a food composition of the disclosure can include vegetal proteins and animal proteins.

As vegetal proteins, one may select vegetal proteins from soybean, chickpea, pea, com gluten, rice, insects, lentils, or barley. Accordingly, the vegetal proteins that can be present in a composition of the disclosure can be selected from soybean, chickpea, pea, com gluten, insects, lentils and barley vegetal proteins, and mixtures thereof. More particularly, in some embodiments, the vegetal proteins can be com gluten proteins.

As animal proteins, one may select animal proteins from poultry, beef, chicken, chicken meal, lamb, lamb meal, dried egg, fish, fish meal, meat and bone meal, meat byproducts, meat meal, turkey, blood plasma or bone marrow. In particular, the animal proteins can be selected from poultry, beef, chicken, chicken meal, lamb, lamb meal, dried egg, fish, fish meal, meat and bone meal, meat byproducts and meat meal animal proteins.

More particularly, the animal proteins can be poultry proteins.

In a particular embodiment, a food composition of the disclosure can include com gluten proteins as vegetal proteins and poultry proteins as animal proteins.

A food composition of the disclosure can include animal and vegetal proteins in a ratio animal to vegetal ranging from about 1:4 to about 3:1, in particular from about 1:3 to about 2:1, more particularly from about 2:1 to about 1:2. The animal proteins to vegetal proteins ratio of a pet food composition of the disclosure can be of about 2:1.

According to an embodiment, all or part of the proteins present in a composition of the disclosure can be hydrolysed proteins. Hydrolysed proteins can be partially or totally hydrolysed. Partially hydrolysed proteins can contain at least about 95% of hydrolysed proteins, preferably at least about 98%, and more preferably at least about 99% of hydrolysed proteins.

Methods to hydrolyse, partially or totally, proteins are well-known.

In some embodiments, the at least partially hydrolysed proteins can have a molecular weight from about 1,000 Da to about 11,000 Da.

As used herein, from about 1,000 Da to about 11,000 Da include, for example, about 1,250 Da, about 1,500 Da, about 1,750 Da, about 2,000 Da, about 2,250 Da, about 2,500 Da, about 2,750 Da, about 3,000 Da, about 3,250 Da, about 3,500 Da, about 3,750 Da, about 4,000 Da, about 4,250 Da, about 4,500 Da, about 4,750 Da, about 5,000 Da, about 5,250 Da, about 5,500 Da, about 5,750 Da, about 6,000 Da, about 6,250 Da, about 6,500 Da, about 6,750 Da, about 7,000 Da, about 7,250 Da, about 7,500 Da, about 7,750 Da, about 8,000 Da, about 8,250 Da, about 8,500 Da, about 8,750 Da, about 9,000 Da, about 9,250 Da, about 9,500 Da, about 9,750 Da, about 10,000 Da, about 10,250 Da, about 10,500 Da, and about 10,750 Da.

In some embodiments, the at least partially hydrolysed proteins can have a molecular weight from about 2,000 Da to about 5,000 Da.

*Fat*

In another aspect, a food composition according to the present disclosure can contain one or more distinct source(s) of fat.

In some embodiments, a food composition disclosed herein can include from about 5% by weight to about 15 % by weight of fat.

As used herein, from about 5% by weight to about 15% by weight of fat includes, but is not limited to, about 5%, about 5.5%, about 6%, about 6.5%, about 7%, about 7.5%, about 8%, about 8.5%, about 9%, about 9.5%, about 10%, about 10.5%, about 11%, about 11.5%, about 12%, about 12.5%, about 13%, about 13.5%, about 14%, about 14.5% and about 15% by weight of fat, based on the total weight of dry matter of the composition.

In an embodiment, a food composition of the disclosure can include from about 5 % by weight to about 12 % by weight, and in particular from about 8 % by weight to about 12 % by weight of fat.

As used herein, the expressions "fat", "crude fat", or "source of fat" are intended to refer to any food-acceptable fat and/or oil. The fat in accordance with the present disclosure can be in a fluid form and/or in a solid form. The food composition according to the disclosure can include fat from animal origin and/or from vegetal origin. Fat can be supplied by any suitable source known by those skilled in the art.

A suitable vegetal, i.e., plant based, fat source for the purpose of the instant disclosure can include, without limitation, wheat, sunflower, safflower, rapeseed, olive, borage, flaxseed, peanuts, blackcurrant seed, cottonseed, wheat, germ, com germ as well as oils derived from these and other plant fat sources, and mixtures thereof.

A suitable animal fat source for the purpose of the instant disclosure can include, for example and without limitation, meat, meat by-products such as chicken fat, turkey fat, beef fat, duck fat, pork fat, lamb fat, fish oil, seafood, dairy, eggs, and mixtures thereof.

In a particular embodiment, fat included in a composition of the disclosure can solely be from animal source(s). In an embodiment, fat in a composition of the disclosure can be selected from pork fat, pork lard, poultry fat, chicken fat, beef fat, lamb fat, fish oil and sunflower, and is in particular pork fat and mixtures thereof.

The fat content of food compositions according to the instant disclosure can be determined by any method known in the art.

*Fibres*

In another aspect, a food composition according to the present disclosure can contain one or more distinct source(s) of fibres and type of fibres. Generally, a food composition as described herein can include a plurality of sources of fibres.

As mentioned previously, a food composition of the disclosure can include from about 3 % by weight to about 12 % by weight of total dietary fibres.

As used herein, from about 3% by weight to about 12% by weight of total dietary fibres can include, but is not limited to, about 3%, about 3.5%, about 4%, about 4.5%, about 5%, about 5.5%, about 6%, about 6.5%, about 7%, about 7.5%, about 8%, about 8.5%, about 9%, about 9.5%, about 10%, about 10.5%, about 11%, about 11.5% and about 12% by weight of total dietary fibres.

In particular, a food composition of the disclosure can include from about 4 % by weight to about 10 % by weight, in particular from about 5 % by weight to about 8 % by weight of total dietary fibres.

The total dietary fibres ("TDF") are the remnants of edible plant cell wall polysaccharides, lignin, and associated substances resistant to hydrolysis by human alimentary tract enzymes. As used herein, the dietary fibre represents the indigestible part of plant foods. The official definition of TDF was published by Trowell H, Southgate DA, Wolever TM, Leeds AR, Gassull MA, Jenkins DJ. Letter: Dietary fibre redefined. Lancet. 1976; 1 (7966):967. doi:10.1016/s0140-6736(76)92750-l.

TDF can be analysed according to the method described by Prosky L, Asp NG, Furda I, DeVries JW, Schweizer TF, Harland BF. Determination of total dietary fibre in foods and food products: collaborative study. J Assoc Off Anal Chem. 1985; 68(4):677-679, which is incorporated herein by reference in its entirety. The most common dietary fibres are lignin, cellulose, hemicellulose, pectin, gums, and resistant starches (also referred to as beta-glucans).

Illustratively, a source of total dietary fibre suitable for implementing a composition according to the disclosure can include rice hulls, com and com by-products, soybean hulls, beet pulp, dried potato product, cellulose, bran, peanut hulls, pectin and a mixture thereof.

As used herein total dietary fibres include soluble fibres (also referred as fermentable fibres) and insoluble fibres (also referred as non-fermentable fibres). Soluble fibres can be defined as being resistant to digestion and absorption in the small intestine and undergo complete or partial fermentation in the large intestine. Insoluble fibres can be defined as non-starch polysaccharides that are resistant to digestion and absorption in the small intestine, and resistant to fermentation in the large intestine.

In practice, a suitable source of soluble fibres, for the purpose of the instant disclosure, can be selected from beet pulp, guar gum, chicory pulp, chicory root, psyllium, pectin, blueberry, cranberry, squash, apples, oats, beans, citrus, barley, peas, and mixtures thereof.

Illustratively, a suitable source of insoluble fibres, for the purpose of the instant disclosure, can be selected from cellulose, whole wheat products, wheat oat, com bran, flax seed, grapes, celery, green beans, cauliflower, potato skins, fruit skins, vegetable skins, peanut hulls, soy fibre, and mixtures thereof.

In an embodiment, fibres of a food composition of the disclosure can be selected from beet pulp, soybean hulls, bran from wheat, cellulose, chicory, com, rice bran, whole grain oat and whole grain barley fibres, and mixtures thereof. In some embodiments, the fibres of a food composition disclosed herein can be particularly chicory fibres.

Within the scope of the instant disclosure, the expression "crude fibre" ("CFIB") refers to a type of dietary fibre that remains as residue after food receives a standardised laboratory treatment with dilute acid and alkali. The treatment dissolves all the soluble fibre and some of the insoluble fibre in a food. The residue or crude fibre is primarily composed of cellulose and lignin. CFIB can be analysed according to the method described by Henneberg, Wilhelm and Friedrich Stohmann, Beitrage Zur Begrundung einer Rationellen Futterung Der Wiederkauer, Vol. I, II, Schwetschke U. Sohn, Brunswick, 1860, 1865, incorporated herein by reference.

*Carbohydrates or NFE*

As used herein, the term Nitrogen Free Extract (NFE) refers to the soluble carbohydrate fraction that is included in a food composition disclosed herein. NFE encompasses soluble polysaccharides, starch, gums, mucilages and pectin, if present in the said food composition.

Thus, NFE does not include the insoluble carbohydrate fraction included in the crude fibre material that may, in some embodiments, be present in the said food composition.

Typically, the content of a food composition in NFE can be determined by subtracting the content of each of the other components (protein, fat, crude fibre, ash) from the whole dry matter of the said food composition.

NFE, or carbohydrates, can be supplied under any suitable source(s), as known in the art. A suitable source of NFE can be selected from starch, oat fibre, cellulose, peanut hulls, beet pulp, parboiled rice, com starch, com gluten meal, and any combination of those sources. Grains supplying carbohydrate can include, but are not limited to, wheat, com, barley, and rice.

In some embodiments, a composition according to the instant disclosure can include from about 28 % by weight to about 65 % by weight, in particular from about 30 % by weight to about 60 % by weight, more particularly from about 40 % by weight to about 58 % by weight and still more particularly from about 45 % by weight to about 56 % by weight of NFE.

As used herein, from about 28% by weight to about 65% by weight of NFE can include, but is not limited to, about 28%, about 29%, about 30%, about 31%, about 32%, about 33%, about 34%, about 35%, about 36%, about 37%, about 38%, about 39%, about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, about 60%, about 61%, about 62%, about 63%, about 64% and about 65% by weight.

*Starch*

In another aspect, a food composition disclosed herein can further include from about 35 % by weight to about 65 % by weight of starch.

As used herein, from about 35% by weight to about 65% by weight of starch can include, but is not limited to, about 35%, about 36%, about 37%, about 38%, about 39%, about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, about 60%, about 61%, about 62%, about 63%, about 64% and about 65% by weight.

In an embodiment, a food composition of the disclosure can include from about 35 % by weight to about 65 % by weight, particularly from about 35 % by weight to about 60 % by weight, and more particularly from about 37 % by weight to about 55 % by weight of starch.

Various types and sources of starch can be used, so long as the desired properties of the expanded food composition are exhibited by the formulation used.

Whole grains, broken grains, flours, roots, and tubers can be used as sources for the starch used to manufacture the porous matrix. Examples of suitable starch sources include rice, brewer's rice, com, barley, oats, wheat, potato, legumes, and/or other biopolymers. Pure or substantially pure starches may be used if desired. These and other sources of starch can be used to form the porous matrix. Selection of starches having known amylose and amylopectin content can be selected using conventional knowledge in the art. By way of example, waxy com, rice, and sorghum starch are known to include almost about 100% amylopectin. Conversely, many high amylose starches, e.g., high amylose com starches, include an amylose content of about 75% of more. Amylose and amylopectin proportions can be selected by using a starting material having starch in the selected proportion, by mixing various starches from various starting materials, or by supplementing starch from natural sources with modified starches such as acid-thinned starches, high amylopectin starches, or high amylose starches. Starch may contain other components such as moisture, protein, and fat.

According to one embodiment, starch in a food composition of the disclosure can be a natural starch. A natural starch is a non-modified starch. A preferred natural starch can be a non-modified cereal starch.

According to an embodiment, starch in a composition of the disclosure can be selected from wheat, barley, tapioca, wheat flour, com flour, rice, potatoes, peas and oat starch, and are in particular selected from wheat, wheat flour and com flour starch.

According to embodiments, a food composition of the disclosure does not include high amylose starch or pre-gelatinised starch. A high amylose content starch has an amylose to amylopectin ratio of at least about 40:60, and more preferably about 50:50. According to an embodiment, a food composition of the disclosure does not include any starch from tapioca.

In an embodiment, a composition of the disclosure does not include high amylose starch, pregelatinized starch and starch from tapioca.

*Ash*

A food composition according to the disclosure can further include ash (or ashes).

The amount of ash that can be present in a food composition of the disclosure can be from about 2% to about 10% by weight, in particular from about 3% to about 9% by weight, and more particularly from about 5% to about 6% by weight.

As used herein, an amount of ash from about 2% by weight to about 10% by weight can include about 2%, about 2.5%, about 3%, about 3.5%, about 4%, about 4.5%, about 5%, about 5.5%, about 6%, about 6.5%, about 7%, about 7.5%, about 8%, about 8.5%, about 9%, about 9.5% and about 10% by weight of ash.

Within the scope of the instant disclosure, the ash is intended to refer to minerals, such as calcium, phosphorus, sodium, chloride, potassium and magnesium, although it is understood that attapulgite is not encompassed by the ash of the food compositions of the disclosure.

In one embodiment, the food composition can be a wet food, such as a canned food, frozen food, or fresh food composition. In one embodiment, the food composition is shelf stable. In another, it can be refrigerated. In other embodiments, the food composition can be an intermediate moisture composition, or a dry food composition as described above.

In another aspect, the disclosure provides methods for manufacturing a food composition including attapulgite and one or more other ingredients suitable for consumption by a feline, e.g., protein, fat, carbohydrate, fibre, B vitamins, and antioxidants. The methods can include admixing one or more ingredients suitable for consumption by an animal with attapulgite. Alternatively, the methods can include applying attapulgite onto the food composition, e.g., as a coating or topping. Attapulgite can be added at any time during the manufacture and/or processing of the food composition. This includes, for example, admixing attapulgite as part of the core formulation of the "body" of the food composition or applying them as a coating, i.e., primarily to the surface of the food composition after its manufacture. The food compositions can be made according to any method suitable in the art.

In another aspect, the present disclosure relates to a pack or a kit. The most suitable composition can be a food composition as described herein which is sold as a pet food, such as a pet food for a domestic cat. The food compositions are preferably packaged. In this way the consumer is able to identify, from the packaging, the ingredients of the composition and confirm that it is suitable for the particular feline in question. The packaging can be metal (usually in the form of a tin or flexifoil), plastic (usually in the form of a pouch or bottle), paper or card. The amount of moisture in any composition can influence the type of packaging, which can be used or is required. The foodstuff can be available as a "kit" or "pack" wherein the different food compositions are individually packaged and these packages are somehow joined together, for example in a box and/or with overarching packaging for the two or more packages of food composition. Such a "kit" can include a "weekly" number of meals for an animal. By weekly it is meant enough of each of the food compositions to feed an animal for seven days, in a convenient pre-packaged kit.

In yet another aspect, the present disclosure relates to a kit for manufacturing a food composition, wherein the kit includes attapulgite.

Another aspect of the present disclosure relates to a method of manufacturing the food composition disclosed herein, including:

a) mixing attapulgite with the other components of the composition, such as the ones described therein;

b) heating the mixture, thereby manufacturing the food composition.

Another aspect of the present disclosure includes a method of reducing faecal odours in a feline. Accordingly, the method includes feeding a feline the food compositions described herein. The reduction of faecal odours can be preferably associated with a decrease of at least one species of VOCs emitted by the faeces. More preferably, the reduction of faecal odours can be associated with a decrease of at least one of the phenolic compounds and/or at least one of the aromatic heterocyclic organic N compounds present in the VOCs emitted by the faeces of the feline. Even more preferably, the phenolic compound can be p-cresol and the aromatic heterocyclic organic N compound is indole.

The method can include a prior step of feeding the feline with a first, different food. Preferably, the first food does not include attapulgite. Accordingly, in this embodiment, the feline is fed a first food, wherein the first food does not include attapulgite, then is fed at least one of the food compositions of the disclosure. As shown by the present examples, the addition of attapulgite in food composition leads to a reduction of faecal odours.

In another aspect, the disclosure provides a method for assessing the faecal odours in a feline. Preferably, the feline has been previously fed with a food, preferably one of the food compositions of the disclosure.

As shown in the present examples, the malodours from the faeces can be associated with VOCs emitted by these faeces. Hence, it is useful when assessing the feline faecal odours to analyse the VOCS emitted from the stool of that feline. In particular, it is useful to quantify the level of the various species of VOCs emitted from the stool of that feline. Phenolic compounds and aromatic heterocyclic organic N compounds, such as p-cresol and indole, respectively, are known to be the most significant contributors to malodours in pet faeces. Accordingly, it is particularly preferable to assay phenolic compounds and/or aromatic heterocyclic organic N compounds, notably p-cresol and/or indole, in faeces from felines. Specifically, it is particularly preferable to quantify the level of phenolic compounds and/or aromatic heterocyclic organic N compounds, notably p-cresol and/or indole, in faeces from felines mentioned.

In an embodiment, the method can include analysing the VOCs from the faeces of the feline. Analysing the VOCS can preferably refer herein to identifying the various species present in the VOCs and measuring the amount of each of these species. The extracted VOCs can be analysed by any method known to the skilled person suitable for this purpose. Preferably, the extracted VOCs can be analysed by gas chromatograph-mass spectrometry (GC-MS). Accordingly, in an embodiment, the method described herein can include analysing VOCs by GC-MS. Preferably, this embodiment refers to the method described herein, the method including measuring the level of the various species of VOCs emitted from the stool of that feline.

In a preferred embodiment, the method disclosed herein can include the steps of:

- feeding the feline at least one of the food compositions of the disclosure; and
- measuring by gas chromatograph-mass spectrometry (GC-MS) the levels of the various species of volatile organic compounds (VOCs) emitted from the stools of that feline.

Advantageously, VOCs emitted by faeces samples are preconcentrated by solid-phase micro extraction (SPME) before analysing the VOCs. SPME is a powerful sample preparation technique which allows efficient isolation and enrichment of analytes from complex matrixes (for a review on SPME, see e.g., Lancioni et al. Headspace solid-phase micro extraction: Fundamentals and recent advances. Advances in Sample Preparation, 2022, 3: 100035).

In a preferred embodiment, the method described herein can include a step of preconcentrating the VOCs by SPME or HS, preferentially by HPME, and a step of analysing the VOCs by GC-MS.

In an embodiment, the method can include a prior step of collecting the faeces from a feline. The faeces thus collected can then be used directly for analysis of the VOCs as described herein. However, it is not always possible to perform the analysis of the VOCs directly after collecting the faeces. Therefore, it can be advantageous in some circumstances to freeze the faeces directly after collection and store them at - 20°C until use. In some instances, the whole of the faeces will be used for analysis. Usually, however, only a sample of faeces may be needed, because of the sensitivity of the analytical methods used in the methods of the disclosure, e.g., GC-MS. Using faecal samples instead of the whole faeces allows for standardisation for repeating the analysis as well as for comparing VOCs analysis between different samples.

In a preferred embodiment, the method disclosed herein can include the following steps:

- feeding the feline with a food, such as one of the food compositions of the disclosure,
- collecting the faeces of the feline;
- preconcentrating the VOCs from the faeces using SPME or HS, preferentially SPME; and
- analysing the VOCS using GC-MS.

The method disclosed herein of analysing the faecal odours in a feline is particularly useful because it allows for assessing the reduction of faecal odours of a feline fed with a food, such as a food composition disclosed herein. This can notably be advantageous for assessing and quantifying the properties of a food composition comprising attapulgite.

Accordingly, another aspect of the disclosure relates to a method of assessing the reduction of faecal odours in a feline fed with at least one food, e.g., at least one of the food compositions of the disclosure.

For example, the method can include comparing the faecal odours of a feline fed with a first food with the faecal odours of the feline fed with a second food, wherein the faecal odours in both cases are analysed by the method disclosed herein. In an embodiment, the first food composition does not include attapulgite, whereas the second food does. It will be immediately clear to the skilled person that the comparison between the faecal odours associated with the first and the second food will be easier if the first and second compositions differ as little as possible. Preferably, the first and second food differ by only one ingredient. In a preferred instance, a first food composition of the disclosure is compared with a second food composition including the same ingredients and further including attapulgite.

Since phenolic compounds and aromatic heterocyclic organic N compounds generate the most intense malodours, a reduction of faecal odours is observed in the first food compared to the second food when at least one of the phenolic compounds and/or at least one of the aromatic heterocyclic organic N compounds is decreased in the first food compared to the second food. In an embodiment of the disclosure, the phenolic compound can be p-cresol. In an embodiment of the disclosure, the aromatic heterocyclic organic N compound can be indole.

In a preferred embodiment, the present disclosure relates to a method for assessing a reduction in faecal odours in a feline, including:

a) feeding the feline a first food composition,
b) measuring by GC-MS the levels of the various species of VOCs, preferably phenolic compounds and aromatic heterocyclic organic N compounds, more preferably p-cresol and indole, emitted by the stools of the feline fed with the first food composition, optionally after concentrating the VOCs by SPME or HS, preferentially SPME;
c) feeding the feline a second food composition, wherein the second food composition includes attapulgite;
d) measuring by GC-MS the levels of the various species of VOCs, preferably phenolic compounds and aromatic heterocyclic organic N compounds, more preferably p-cresol and indole, emitted by the stools of the feline fed with the second food composition, optionally after concentrating the VOCs by SPME or HS, preferentially SPME;
e) comparing the level of step d) with the level of step b).

In order to facilitate comparison, comparable faecal samples can be preferably used, e.g., faecal samples having the same weight.

The presently disclosed subject-matter will be understood better by reference to the following examples. These are meant only as an illustration and not as a limitation of the disclosed subject-matter. The materials and methods used in the examples are summarised below.

## EXAMPLES

### Materials and methods

#### Study design

Two groups of nine cats were assigned to either a wet diet or a dry diet format, each of which had three formulations: control, and control manufactured with either yucca, or attapulgite. Cats were fed each formulation of their assigned diet format for 10 consecutive days in turn, of which the first 7 days were the adaptation period and the remaining 3 days the faeces collection period. Unless stated otherwise, 'diet' is hereafter used to indicate the combination of format and formulation and therefore there was a total of eight diets.

During the faeces collection period, all faeces were collected twice daily (morning/afternoon). Each stool of each cat was then scored for consistency on a scale from 1 to 5. Depending on defecation, there could thus be more than one faecal score per cat for a given day.

In addition, fresh faecal samples were removed for evaluation by a sensory panel. This evaluation was carried out less than 1 hour after removal.

Finally, all the faeces of each cat during that period were collected, pooled, and frozen at -20°C for later chemical analysis of volatile compounds and measurement of apparent total tract digestibility.

#### Animals and husbandry

Cats were assigned to the study from the Royal Canin research cattery in France where they were accommodated for the duration of the study. They were fed twice daily amounts calculated to maintain their bodyweight at the start of the study ($100$ kcal/kg $BW^{-0.67}$).

All cats used in the feeding trials were maintained in the colony of a commercial pet food. Regular health checks were conducted to ensure that the cats participating in the feeding trials remained healthy. In addition, the wellbeing of all animals was assessed daily by the caregivers. No adverse events were reported during any of the food trials, none of the animals had to be withdrawn and no modification to any of the experimental protocols was required.

During the adaptation period, cats were housed in closed indoor rooms with-outdoor access. They were fed ad libitum with free access to water.

During the collection period, cats were housed in individual lodges without outdoor access, but with Supervised Recreational Indoor Outings. Cats had free water access but were fed on a specific schedule. For dry food, food was delivered once a day according to pet's needs, whereas for wet food, food was delivered twice a day, according to pet's needs.

Diet compositions

Three dry and three wet-format diets were manufactured using standard processing conditions at Royal Canin, France. These diets were formulated based on Mars Inc. commercial recipes with the inclusion level of chicken breast, soya protein isolate, lard and wheat flour altered to achieve differences in the macronutrient energy ratios of the diets (Table 1).

**Table 1: Nutrient composition of study diet**

| | Dry diet | | | Wet diet | | |
|---|---|---|---|---|---|---|
| | Control diet | Control diet + Yucca | Control diet +Attapulgite | Control diet | Control diet + Yucca | Control diet +Attapulgite |
| Measured Gross Energy (kcal/kg) | 4682 | 4679 | 4685 | 1140 | 1150 | 1120 |
| Crude protein(%) | 28.3 | 28.2 | 27.9 | 13.5 | 12.8 | 12.8 |
| Crude Fat (%) | 12.6 | 12.3 | 12.1 | 3.4 | 3.2 | 2.9 |
| Total dietary Fiber (%) | 11 | 10.6 | 10.5 | 1.3 | 1.2 | 1.2 |
| Ash (%) | 6.3 | 6.2 | 6.9 | 1.5 | 1.7 | 1.5 |
| Moisture (%) | 5.8 | 5.6 | 5.3 | 78.6 | 78.6 | 78.7 |
| Other | NA | 125ppm Yucca | 1% Attapulgite | NA | 125ppm Yucca | 0.125% Attapulgite |
| DM, dry matter | | | | | | |

Apparent total tract digestibility

Apparent total tract digestibility is the reference methodology as it is a non-invasive one. It corresponds to the food portion digested in the small and large intestine.

$$\% \text{ Total nutrient digestibility} = \frac{\text{Nutrient intake (g)} - \text{Nutrient in faeces (g)}}{\text{Nutrient intake (g)}} \text{ x } 100$$

Sensory perception of odours

A panel of four humans were trained in the week prior to the first study evaluations. A set of four common descriptors of faecal odours was first established through comparison of collected faeces by the panellists: animal/faecal, cheesy, sulphur and amine. Referent individual molecules were also used as confirmation for the panellists. This learning phase was then followed by a training phase where the panellists went through the collected faeces again to find the different odours in a sample.
The fresh cat faeces samples were anonymised and the order of the smelling assessment per panellist was random. Intensity was determined by each panellist via free positioning on a linear scale.

Chemical analysis of odours

All faeces for individual cats over the three-day collection period were pooled for analysis by gas chromatography (GC 7890A, Agilent, Santa Clara, CA, USA) and mass spectrometry (MSD 5975C, Agilent, Santa Clara, CA, USA). Faecal samples (4 g in a 20 ml vial) were agitated at 250 rpm (on 10 s and off 1 s cycles) for 15 min at 70°C. Volatile constituents were extracted at 70°C for 30 min by solid-phase microextraction (SMPE. CTC Pal, Agilent, Santa Clara, CA, USA) using a StableFlex 50/30 μm, 2 cm long fibre with divinylbenzene/carboxen/polydimethylsiloxane (Supelco, Merck KGaA, Darmstadt, Germany) and desorbed into the GC-MS injector at 270°C for 90 s using He (1.4 mL/min) and the splitless 1 mm mode. The chromatographic column was an HP-5MS 30 m x 0.32 mm x 0.25 μm column, and the oven program was 80°C for 2 min followed by temperature increases of 10°C/min up to 240°C. Data were processed with Chemstation Version E (Agilent, Santa Clara, CA, USA) and the Virtual Molecules Library: Wiley9Nist08.

Diet palatability

Pair-wise comparisons of diet preference were assessed with the two-bowl test. Cats were presented simultaneously with two identical bowls containing enough control or test diet to satisfy their energy requirements. Observers recorded the first food to be consumed and the amount of each food consumed after 18 hours for dry diets and 20 min for wet diets.

Ethics approval

The study protocol was approved by the Royal Canin Ethics Committee.

Statistical analysis

The number of cats for the study was selected to meet the minimum of eight animals required to reliably assess the digestibility of foods.

Scores for faecal odours are displayed as mean (standard deviation [SD]) across stool samples and panellists, and the percentage of chemical classes of faecal volatile components are displayed as median (interquartile range [IQR]).

The effect of diet and odour descriptor on perceived faecal odour intensity and the interaction between diet and odour descriptors were determined by analysis of variance (ANOVA) using ordinary least squares with diet and odour descriptors as fixed effects and animal as a random effect. Similarly, ordinary least squares ANOVA was used to determine the relationship between diet, diet format and both the profile of faecal volatile compounds and specific volatile molecules of interest identified by multivariate modelling. Multivariate linear modelling with a partial least square analysis (PLS) was used to determine the key molecules associated with faecal odours detected by the sensory panel depending on the diet type. Statistical analyses were performed with JMP®, Version 13, JMP Statistical Discovery LLC, Cary, NC, 1989-2023.

Results

Study population

Cats assigned to the wet diet format were seven male and two female neutered adults, of which one was an Exotic Shorthair, six were British Shorthair and two were house cats. The dry diet group comprised 6 male and three female neutered adults identified as Exotic Shorthair (n = 1), British Shorthair (n = 1), Highland Fold (n = 1), Selkirk Rex (n =1) and house cats (n -= 5).

Digestibility

Mean faecal score was similar for all diets in the wet format (2.5, 2.5, and 2.6 for control, yucca, and attapulgite diets, respectively, P=??) and all diets in the dry format for (2.5, 2.6, and 2.6 for control, yucca, and attapulgite diets, respectively, P=??), being between acceptably soft and optimal.

The coefficient of apparent total tract digestibility (ATTD) of protein was similar between diet formulations in either the wet or dry diet format (Table 2), and the coefficient of ATTD of dry matter was similar between diet formulations for the dry diet format. Dry matter digestibility was numerically slightly lower in the wet attapulgite diet than wet control and higher in the wet yucca diet than wet control (Table 2).

**Table 2. Coefficients of apparent total tract digestibility**

| Diet | Coefficient of apparent total tract digestibility, % | |
| --- | --- | --- |
| | Dry matter | Protein |
| **Wet diet** | | |
| Control | 83.7 | 91.7 |

(continued)

| Diet | Coefficient of apparent total tract digestibility, % | |
| --- | --- | --- |
| | Dry matter | Protein |
| Yucca 125 ppm | 96.6 | 91.5 |
| Attapulgite 0.125% | 80.3 | 89.0 |
| Dry diet | | |
| Control | 79.7 | 85.1 |
| Yucca 125 ppm | 82.8 | 87.1 |
| Attapulgite 1% | 81.6 | 85.8 |

Sensory evaluations

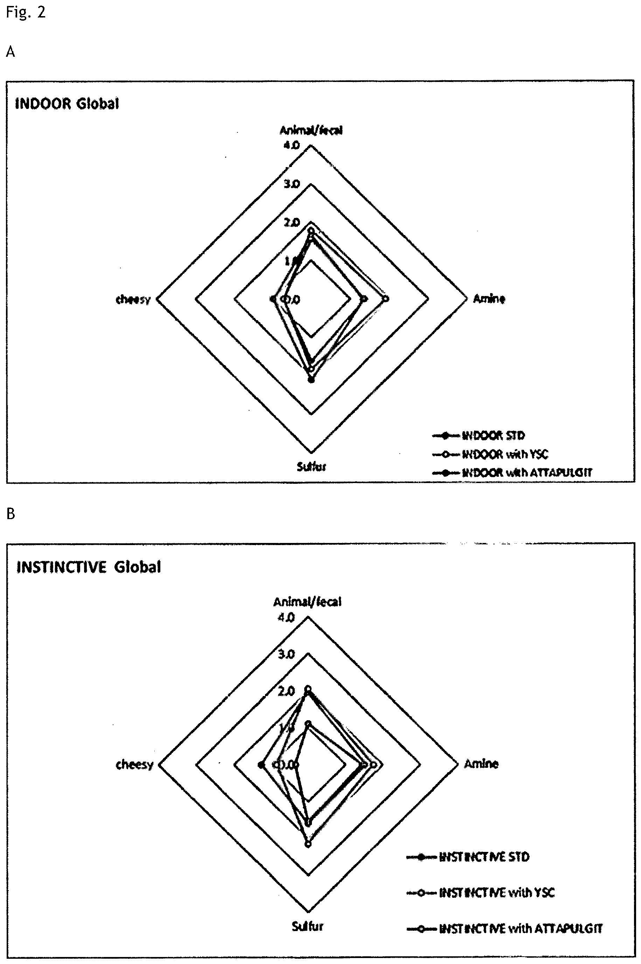

The predominant odours described in the sensory evaluation training period were animal/faecal, amine, sulphur, and cheesy, and these were selected for scoring in the study. Mean odour scores are presented in Table 3 and Figure 2.

**Table 3. Mean (standard deviation) intensity of perceived fecal odors associated with wet and dry diets**

| Odour descriptor | Wet diet | | | Dry diet | | |
| --- | --- | --- | --- | --- | --- | --- |
| | Control | Yucca 125 ppm | Attapulgite 0.125% | Control | Yucca 125 ppm | Attapulgite 1% |
| Number of assessed samples | 20 | 20 | 20 | 19 | 20 | 20 |
| Animal/ faecal | 2.0 (0.68) | 2.1 (0.51) | 1.4 (1.13) | 1.6 (0.91) | 1.8 (0.36) | 1.6 (0.71) |
| Amine | 1.5 (1.06) | 1.8 (0.76) | 1.9 (0.84) | 1.3 (0.71) | 1.9 (0.53) | 1.4 (0.47) |
| Sulphur | 1.6 (0.88) | 2.1 (0.63) | 2.0 (0.60) | 2.1 (0.55) | 1.8 (0.69) | 1.6 (0.30) |
| Cheesy | 1.2 (0.84) | 0.8 (0.92) | 0.4 (0.73) | 1.0 (0.65) | 0.7 (0.91) | 0.7 (0.75) |
| DM, dry matter. | | | | | | |

Odour intensity was significantly affected by diet (P=0.0123), odour descriptor (P <0.0001) and diet x odour descriptor (P = 0.0085). Slice analysis showed that all diet formulations had a significant effect on odour intensity (control P = 0.0264, yucca P = 0.0011, and attapulgite (P = 0.0182), and of the odour descriptors, animal/faecal (P = 0.0064) and amine (0.0006) were significantly associated with odour intensity. Diet also had a significant effect on odour intensity for the animal/faecal odour descriptor (P=0.0027). Diet format (P=0.1446) and formulation (P=7792) alone did not affect the intensity of animal/faecal odour, but there was a diet format x formulation interaction (P = 0.0129).

Chemical analysis of volatile compounds in faeces

Volatile faecal compounds detected by GC-MS were evaluated in groups of major chemical classes: acids, alcohols, aldehydes, alkanes, alkenes, esters, ethers, furans, ketones, lactones, nitrogenous compounds, oxides, phenyl compounds, sulphur compounds, and terpenes.

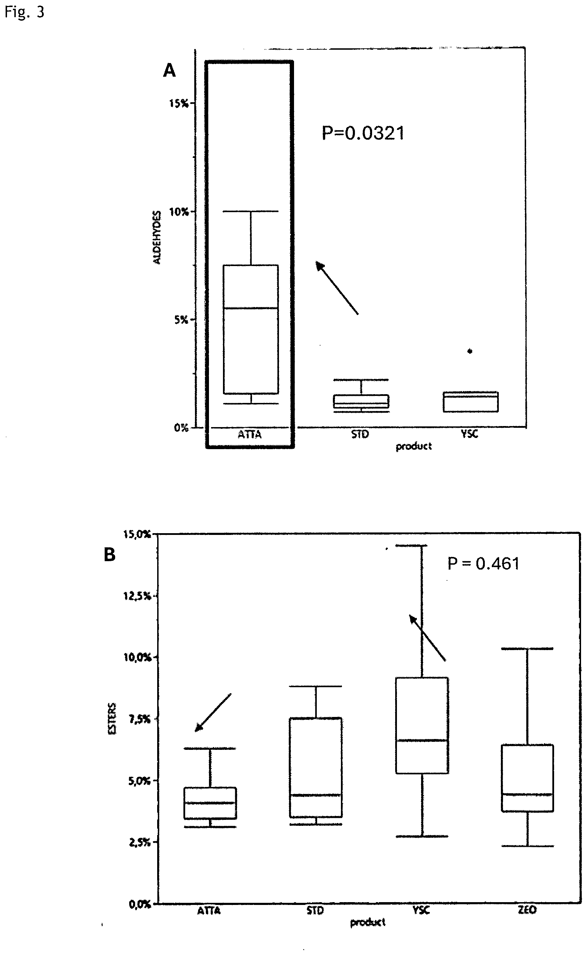

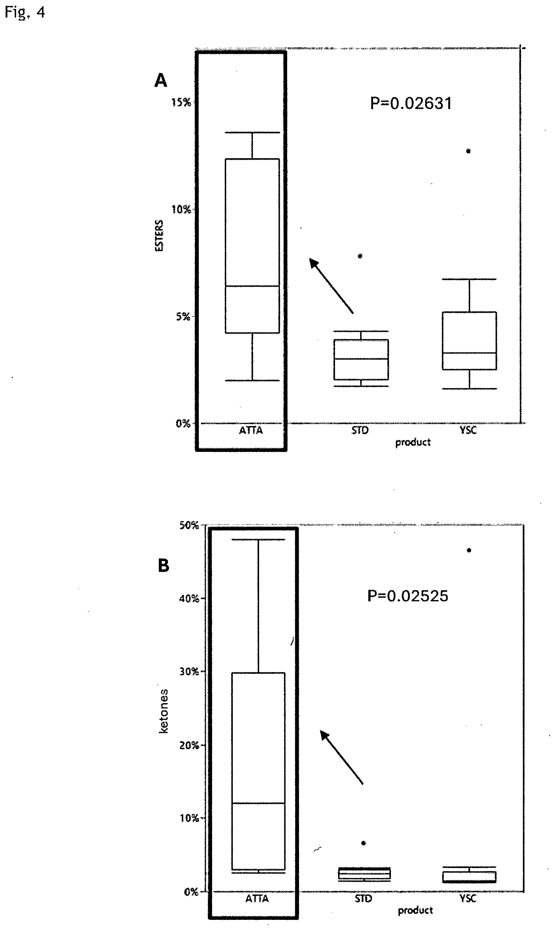

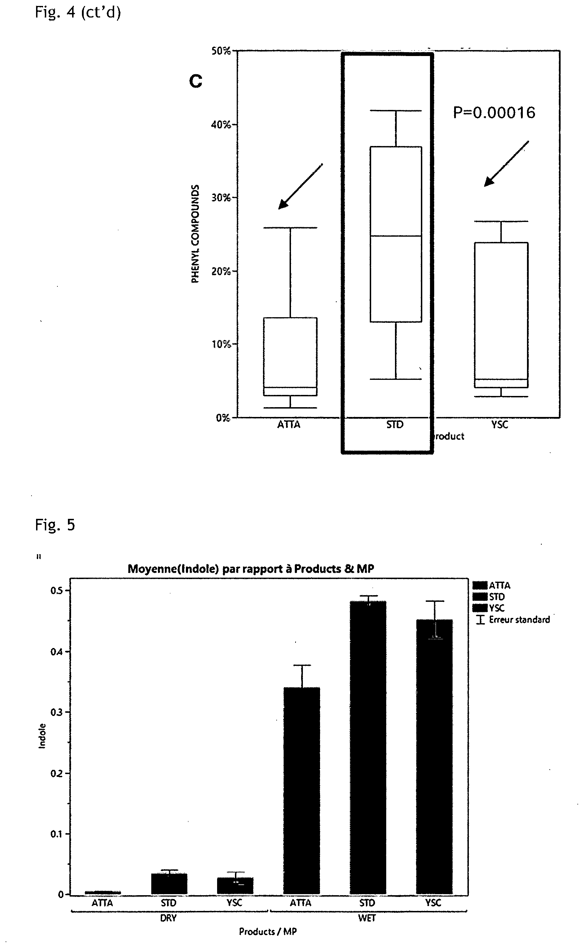

In cats fed wet diets, diet significantly affected the proportion of volatile faecal aldehydes (P=0.032) and esters (P=0.046) as a percentage of all volatile faecal components detected by GC-MS (Figure 3). In the dry diet group, diet significantly affected the proportion of volatile faecal esters (P=0.026), ketones (0.025) and phenyl compounds (P=0.00016) (Figure 4). There was no effect of diet formulation in either format on other chemical classes.

Diet and diet format had a significant effect on the profile of volatile faecal components (P=0.0078 and P <0.0001, respectively), and there was a significant diet x diet format interaction (P <0.0001).

The proportions of faecal acetophenone and indole from cats fed wet diets, and the proportions of faecal butanoic acid, pentanoic acid, acetophenone, p-cresol and indole from cats fed dry diets were positively associated with the intensity at least two of the studied odour descriptors and were not negatively associated with any of the odour descriptors. Indole was selected for further investigation because it appeared to be associated with odour intensity in both diet formats and is a metabolite of digestion.

Diet format (P <0.0001), diet formulation (0.0003), and diet format x diet formulation (P=0.0263) had significant impacts on the amount of indole in faeces. There was less volatile indole generated from the faeces of cats fed dry diets compared with those fed wet diets.

The wet attapulgite diet was associated with significantly less indole compared with the wet control (P<0.0001).

Palatability

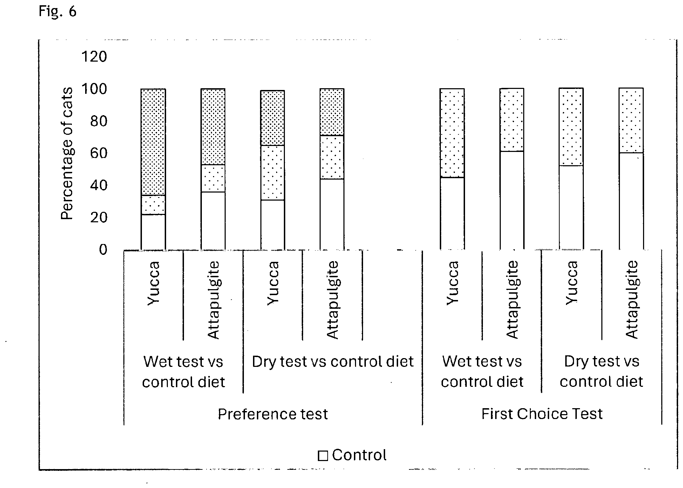

Cats showed a lower preference for wet attapulgite compared with wet control diet (P=0.043); their first diet choice favoured dry control compared with dry attapulgite diet (Figure 6). Also in the palatability tests, significantly less wet attapulgite diet was consumed compared with wet control diet (43% vs 57%, respectively) and less dry attapulgite diet compared with dry control diet (40% vs 60%, respectively). No other palatability results were statistically significant.

3/CONCLUSION

It has been demonstrated that the diet impact significantly the pet owner perception of the faecal odour of cat faeces. The principal descriptor impacted are Animal/Faecal and amine notes.

It has been also demonstrated that the common molecule between dry and wet diets which is positively linked to sensory perception is INDOLE.

This molecule is generated during the cat digestion and can be limited by the addition of attapulgite preferentially and then more slightly Yucca.

In literature, this molecule is described as to have a "intense faecal odour", "animal character", "musk faecal".

**Bibliographic references:**

1. Urrego et al. Dietary protein sources and their effects on faecal odour and the composition of volatile organic compounds in faeces of French Bulldogs. J Anim Physiol Anim Nutr (Berl). 2021;105 (Suppl 1):65-75

2. Uetake et al. Volatile faecal components related to sex and age in domestic cats (Felis catus). J. Appl. Anim. Res. 2017; 46: 766-770

3. Miyazaki et al. Olfactory discrimination of anal sac secretions in the domestic cat and the chemical profiles of the volatile compounds. J Ethol. 2018; 36(1):99-105

4. Banik et al. Simultaneous Chemical and Sensory Analysis of Domestic Cat Urine and Feces with Headspace Solid-Phase Microextraction and GC-MS-Olfactometry. Separations. 2021; 8(2):15

5. US 6,074,460

6. EP 2283723B1

7. Zaid et al. Attapulgite in the Treatment of Acute Diarrhoea: A Double-blind Placebo-controlled Study. Journal of Diarrhoeal Diseases Research. 1995; 13(1), 44-46

8. Carretero & Pozo. Clay and non-clay minerals in the pharmaceutical and cosmetic industries. Part II. Active ingredients. Appl. Clay Sci. 2010; 47: 171-181

9. Banik et al. Simultaneous Chemical and Sensory Analysis of Domestic Cat Urine and Feces with Headspace Solid-Phase Microextraction and GC-MS-Olfactometry. Separations. 2021; 8(2):15

10. Trowell H, Southgate DA, Wolever TM, Leeds AR, Gassull MA, Jenkins DJ. Letter: Dietary fibre redefined. Lancet. 1976; 1(7966):967. doi:10.1016/s0140-6736(76)92750-1

11. Prosky L, Asp NG, Furda I, DeVries JW, Schweizer TF, Harland BF. Determination of total dietary fibre in foods and food products: collaborative study. J Assoc Off Anal Chem. 1985; 68(4):677-679

12. Henneberg, Wilhelm and Friedrich Stohmann, Beitrage Zur Begrundung einer Rationellen Futterung Der Wiederkauer, Vol. I, II, Schwetschke U. Sohn, Brunswick, 1860, 1865

13. Lancioni et al. Headspace solid-phase microextraction: Fundamentals and recent advances. Advances in Sample Preparation, 2022, 3: 100035

**Claims**

1. A food composition for reducing faecal odours in a feline, the composition comprising attapulgite.

2. The food composition of claim 1, wherein the composition is comprising at least about 0.05 % by weight of attapulgite.

3. The food composition of any one of claims 1 or 2, wherein the composition is a dry composition, a wet composition, or a semi-moist composition.

4. The food composition of any one of claims 1-3, wherein the composition is a wet food composition and comprises from about 0.5 % by weight to about 2.5 % by weight, preferably around about 1% by weight, of attapulgite.

5. The food composition of any one of claims 1-3, wherein the composition is a wet food composition and comprises from about 0.05 % by weight to about 0.2 % by weight, preferably around about 0.125% by weight, of attapulgite.

6. The food composition of any one of claims 1-5, wherein the composition is a nutritionally complete food or a functional complement.

7. The food composition of any one of claims 1-6, wherein the feline is the domestic feline animal *(Felix catus)*.

8. A kit for manufacturing the food composition of any one of claims 1-7, wherein the kit comprises attapulgite.

9. A method of manufacturing the food composition of any one of claims 1-7, comprising:

   a) mixing attapulgite with the other components of the composition, such as the ones described therein;
   b) heating the mixture, thereby manufacturing the food composition.

10. A method for assessing the faecal odours in a feline, wherein the method comprises a step of:

   • feeding the feline with at least one of the food compositions of claims 1-7; and
   • measuring by gas chromatograph-mass spectrometry (GC-MS) the levels of the various species of volatile organic compounds (VOCs), preferably phenolic compounds and aromatic heterocyclic organic N compounds, more preferably p-cresol and indole, emitted from the stools of that feline.

11. The method of claim 10, wherein the method comprises a prior step of preconcentrated the VOCs by solid-phase micro extraction (SPME) or headspace (HS), preferentially SPME.

12. A method for assessing a reduction in faecal odours in a feline, comprising:

   a) feeding the feline a first food composition,
   b) measuring by GC-MS the levels of the various species of VOCs, preferably phenolic compounds and aromatic heterocyclic organic N compounds, more preferably p-cresol and indole, emitted by the stools of the feline fed with the first food composition, optionally after concentrating the VOCs by SPME or HS, preferentially SPME;
   c) feeding the feline a second food composition, wherein the second food composition comprises attapulgite;
   d) measuring by GC-MS the levels of the various species of VOCs, preferably phenolic compounds and aromatic heterocyclic organic N compounds, more preferably p-cresol and indole, emitted by the stools of the feline fed with the second food composition, optionally after concentrating the VOCs by SPME or HS, preferentially SPME;
   e) comparing the level of step d) with the level of step b).

Fig. 1

Fig. 2

A

B

Fig. 3

Fig. 4

Fig. 4 (ct'd)

Fig. 5

Fig. 6

Europäisches
Patentamt

European
Patent Office

Office européen
des brevets

# EUROPEAN SEARCH REPORT

**Application Number**

EP 24 31 5145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 789 196 A (JIANGSU AGRI ANIMAL HUSBANDRY VOCATIONAL COLLEGE) 20 October 2020 (2020-10-20) * claims 1,4 * * the whole document * * paragraph ["SummaryoftheInvention"] * | 1-4,6-8 | INV. A23K20/28 A23K50/45 A23K50/48 |
| X | US 2021/353814 A1 (FIELDS MARVEL [US] ET AL) 18 November 2021 (2021-11-18) * paragraphs [0117] - [0119], [0248] * * claims 19-20 * | 8 | |
| X | EP 0 885 557 A1 (TOLSA SA [ES]) 23 December 1998 (1998-12-23) * claims 1-2,4 * | 8 | |
| A | JP 2012 095661 A (HILLS PET NUTRITION INC) 24 May 2012 (2012-05-24) * the whole document * | 1-12 | |
| A | US 2005/175577 A1 (JENKINS DENNIS B [US] ET AL) 11 August 2005 (2005-08-11) * paragraphs [0015], [0032], [0060] * | 1-12 | **TECHNICAL FIELDS SEARCHED (IPC)** A23K |

The present search report has been drawn up for all claims

| Place of search | Date of completion of the search | Examiner |
|---|---|---|
| Munich | 26 August 2024 | Couzy, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 631 362 A1**

## ANNEX TO THE EUROPEAN SEARCH REPORT
## ON EUROPEAN PATENT APPLICATION NO.

EP 24 31 5145

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2024

| Patent document cited in search report | | | Publication date | Patent family member(s) | | | Publication date |
|---|---|---|---|---|---|---|---|
| CN 111789196 | A | | 20-10-2020 | NONE | | | |
| US 2021353814 | A1 | | 18-11-2021 | CA | 3051268 | A1 | 24-05-2018 |
| | | | | EP | 3541355 | A1 | 25-09-2019 |
| | | | | US | 2021353814 | A1 | 18-11-2021 |
| | | | | WO | 2018094314 | A1 | 24-05-2018 |
| EP 0885557 | A1 | | 23-12-1998 | AT | E273612 | T1 | 15-09-2004 |
| | | | | DE | 69825678 | T2 | 25-08-2005 |
| | | | | EP | 0885557 | A1 | 23-12-1998 |
| | | | | ES | 2150333 | A1 | 16-11-2000 |
| | | | | ES | 2227767 | T3 | 01-04-2005 |
| | | | | PT | 885557 | E | 31-12-2004 |
| JP 2012095661 | A | | 24-05-2012 | AT | E418271 | T1 | 15-01-2009 |
| | | | | AT | E537709 | T1 | 15-01-2012 |
| | | | | AU | 2004294958 | A1 | 16-06-2005 |
| | | | | AU | 2004294986 | A1 | 16-06-2005 |
| | | | | BR | PI0416877 | A | 06-02-2007 |
| | | | | BR | PI0416881 | A | 06-02-2007 |
| | | | | CA | 2546283 | A1 | 16-06-2005 |
| | | | | CA | 2546286 | A1 | 16-06-2005 |
| | | | | CN | 1886061 | A | 27-12-2006 |
| | | | | CN | 1972601 | A | 30-05-2007 |
| | | | | CN | 103636926 | A | 19-03-2014 |
| | | | | DK | 1694136 | T3 | 10-04-2012 |
| | | | | DK | 1694137 | T3 | 27-04-2009 |
| | | | | EP | 1694136 | A2 | 30-08-2006 |
| | | | | EP | 1694137 | A2 | 30-08-2006 |
| | | | | ES | 2320138 | T3 | 19-05-2009 |
| | | | | ES | 2378768 | T3 | 17-04-2012 |
| | | | | JP | 5506138 | B2 | 28-05-2014 |
| | | | | JP | 2007512022 | A | 17-05-2007 |
| | | | | JP | 2007512029 | A | 17-05-2007 |
| | | | | JP | 2012095661 | A | 24-05-2012 |
| | | | | RU | 2357426 | C2 | 10-06-2009 |
| | | | | RU | 2374897 | C2 | 10-12-2009 |
| | | | | US | 2005112217 | A1 | 26-05-2005 |
| | | | | US | 2005112259 | A1 | 26-05-2005 |
| | | | | WO | 2005053420 | A2 | 16-06-2005 |
| | | | | WO | 2005053422 | A2 | 16-06-2005 |
| | | | | WO | 2005053424 | A1 | 16-06-2005 |
| | | | | ZA | 200604322 | B | 30-11-2011 |
| | | | | ZA | 200604329 | B | 27-02-2008 |
| US 2005175577 | A1 | | 11-08-2005 | NONE | | | |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 31 5145

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2024

| Patent document cited in search report | Publication date | Patent family member(s) | Publication date |
|---|---|---|---|
| | | | |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6074460 A
- EP 2283723 B1

- US 6074460 B

**Non-patent literature cited in the description**

- **URREGO et al.** Dietary protein sources and their effects on faecal odour and the composition of volatile organic compounds in faeces of French Bulldogs.. *J Anim Physiol Anim Nutr (Berl).*, 2021, vol. 105 (1), 65-75
- **UETAKE et al.** Volatile faecal components related to sex and age in domestic cats (Felis catus).. *J. Appl. Anim. Res.*, 2017, vol. 46, 766-770
- **MIYAZAKI et al.** Olfactory discrimination of anal sac secretions in the domestic cat and the chemical profiles of the volatile compounds. *J Ethol.*, 2018, vol. 36 (1), 99-105
- **BANIK et al.** Simultaneous Chemical and Sensory Analysis of Domestic Cat Urine and Feces with Headspace Solid-Phase Microextraction and GC-MS-Olfactometry. *Separations*, 2021, vol. 8 (2), 15
- **ZAID et al.** Attapulgite in the Treatment of Acute Diarrhoea: A Double-blind Placebo-controlled Study.. *Journal of Diarrhoeal Diseases Research*, 1995, vol. 13 (1), 44-46
- **CARRETERO** ; **POZO.** Clay and non-clay minerals in the pharmaceutical and cosmetic industries. Part II. Active ingredients. *Appl. Clay Sci.*, 2010, vol. 47, 171-181
- **TROWELL H** ; **SOUTHGATE DA** ; **WOLEVER TM** ; **LEEDS AR** ; **GASSULL MA** ; **JENKINS DJ.** Letter: Dietary fibre redefined. *Lancet*, 1976, vol. 1 (7966), 967
- **PROSKY L** ; **ASP NG** ; **FURDA I** ; **DEVRIES JW** ; **SCHWEIZER TF** ; **HARLAND BF.** Determination of total dietary fibre in foods and food products: collaborative study. *J Assoc Off Anal Chem.*, 1985, vol. 68 (4), 677-679

- **LANCIONI et al.** Headspace solid-phase micro extraction: Fundamentals and recent advances. *Advances in Sample Preparation*, 2022, vol. 3, 100035
- **URREGO et al.** Dietary protein sources and their effects on faecal odour and the composition of volatile organic compounds in faeces of French Bulldogs. *J Anim Physiol Anim Nutr (Berl).*, 2021, vol. 105 (1), 65-75
- **UETAKE et al.** Volatile faecal components related to sex and age in domestic cats (Felis catus). *J. Appl. Anim. Res.*, 2017, vol. 46, 766-770
- **MIYAZAKI et al.** Olfactory discrimination of anal sac secretions in the domestic cat and the chemical profiles of the volatile compounds. *J Ethol*, 2018, vol. 36 (1), 99-105
- **ZAID et al.** Attapulgite in the Treatment of Acute Diarrhoea: A Double-blind Placebo-controlled Study. *Journal of Diarrhoeal Diseases Research*, 1995, vol. 13 (1), 44-46
- **TROWELL H** ; **SOUTHGATE DA** ; **WOLEVER TM** ; **GASSULL MA** ; **JENKINS DJ.** Letter: Dietary fibre redefined. *Lancet*, 1976, vol. 1 (7966), 967
- **PROSKY L** ; **ASP NG** ; **FURDA I** ; **DEVRIES JW** ; **SCHWEIZER TF** ; **HARLAND BF.** Determination of total dietary fibre in foods and food products: collaborative study. *J Assoc Off Anal Chem*, 1985, vol. 68 (4), 677-679
- **HENNEBERG, WILHELM** ; **FRIEDRICH STOH-MANN.** *Beitrage Zur Begrundung einer Rationellen Futterung Der Wiederkauer*, vol. I, II, 1865
- **LANCIONI et al.** Headspace solid-phase microextraction: Fundamentals and recent advances. *Advances in Sample Preparation*, 2022, vol. 3, 100035